(19) Europäisches Patentamt
European Patent Office
Office européen des brevets

(11) **EP 4 497 784 A1**

(12) **EUROPEAN PATENT APPLICATION**
published in accordance with Art. 153(4) EPC

(43) Date of publication:
**29.01.2025 Bulletin 2025/05**

(21) Application number: 23774467.7

(22) Date of filing: **03.03.2023**

(51) International Patent Classification (IPC):
*C08L 69/00* $^{(2006.01)}$    *C08L 9/00* $^{(2006.01)}$
*C08L 21/00* $^{(2006.01)}$    *C08L 25/04* $^{(2006.01)}$
*C08L 53/00* $^{(2006.01)}$    *H01Q 1/42* $^{(2006.01)}$

(52) Cooperative Patent Classification (CPC):
**C08L 9/00; C08L 21/00; C08L 25/04; C08L 53/00;
C08L 69/00; H01Q 1/42**

(86) International application number:
**PCT/JP2023/008182**

(87) International publication number:
**WO 2023/181868 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2022 JP 2022045577
22.03.2022 JP 2022045578**

(71) Applicant: **Mitsubishi Engineering-Plastics
Corporation
Tokyo 105-0021 (JP)**

(72) Inventors:
• **NISHINO, Yohei
Hiratsuka-shi, Kanagawa 254-0016 (JP)**
• **HIROSE, Koji
Hiratsuka-shi, Kanagawa 254-0016 (JP)**

(74) Representative: **Müller-Boré & Partner
Patentanwälte PartG mbB
Friedenheimer Brücke 21
80639 München (DE)**

(54) **POLYCARBONATE RESIN COMPOSITION AND MEMBER FOR ANTENNA**

(57) Provided are a polycarbonate resin composition having a low relative permittivity and a low dielectric dissipation factor and excellent in terms of heat resistance, impact resistance, toughness and stiffness, and a member for an antenna. The polycarbonate resin composition comprising 30 to 120 parts by mass of a polystyrenic resin (B), and 3 to 50 parts by mass of an elastomer (C), relative to 100 parts by mass of a poly- carbonate resin (A), wherein a melt viscosity ratio ($\eta$A/$\eta$B) of the polycarbonate resin (A) to the polystyrenic resin (B) at 260°C and 1216 sec$^{-1}$ is within a range of 4.5 to 12.5.

**EP 4 497 784 A1**

**Description**

[Technical Field]

The present invention relates to a polycarbonate resin composition, and in detail, to a polycarbonate resin composition and a member for an antenna that have a low relative permittivity and a low dissipation factor and are excellent in terms of heat resistance, impact resistance, toughness and stiffness.

[Background Art]

For signals that are used in mobile communication equipment, base station devices thereof, network infrastructure equipment such as servers and routers, and electronic equipment such as large computers, enhancement in the speed and the capacity thereof is underway. In addition, aside from the above-described electronic equipment, there is an ongoing effort for putting a system that handles high-frequency radio signals into practical use in the automobile or transportation system-related field or the indoor near-field communication field.

In addition, in the information communication field where GHz-level high-frequency signals are in use, significant enhancement in the speed has been achieved, and in Japan, the commercial service of the 5th generation mobile communication system (5G) was initiated in March 2020, and studies are underway to use higher frequency bands in the 6th generation mobile communication system (6G), which is to be the next generation system.

In order to deal with such enhancement in the capacity and the speed, there is a demand for a material having a low relative permittivity and a low dissipation factor for members of communication equipment or radar equipment in use.

The present applicants proposed in PTL 1 that a resin composition containing a thermoplastic resin and alumina (B) provides a cover for a millimeter-wave radar having a low relative permittivity, a low dissipation factor and excellent millimeter-wave permeability. However, alumina is a material having a high absolute value of permittivity, and this literature shows that, in Example 2 where the polycarbonate resin of PTL 1 is contained, the relative permittivity is 3.7 and the dissipation factor is 0.0093.

In order to decrease the transmission loss of an electromagnetic wave, a material having not only a low relative permittivity but also a low dissipation factor is required since the degree of a transmission loss that is caused in the material is proportional to the product of the square root of the relative permittivity and the dissipation factor of the material. However, it is difficult to say that the above-described relative permittivity and dissipation factor of the material are low enough to cope with enhancement in the capacity and the speed.

Furthermore, in PTL 2, the present applicants found that a polycarbonate resin having a specific bisphenol unit has a low dissipation factor and proposed a cover for a millimeter-wave radar of a polycarbonate resin material having a relative permittivity and a dissipation factor both reduced by blending the above-described polycarbonate resin into a general-purpose polycarbonate resin. This polycarbonate resin material is a useful material, but there is a problem in that the use thereof is limited due to the high price.

Blending of polystyrene as a material having a favorable dielectric characteristic can be considered, but polystyrene has defects of poor compatibility with general-purpose polycarbonate resin, poor heat resistance, and furthermore, poor impact resistance.

In addition, members, covers or the like for an antenna are required to have high stiffness or excellent impact resistance not only to sufficiently keep the stiffness but also to sufficiently withstand wind pressure in outdoor installation and are also required to have excellent heat resistance to prevent the function from being impaired at high temperatures.

[Citation List]

[Patent Literature]

[PTL 1] JP 2013-102512 A
[PTL 2] JP 2019-195137 A

[Summary of Invention]

[Technical Problem]

With the foregoing in view, it is an object (problem) of the present invention to provide a polycarbonate resin composition having a low relative permittivity and a low dissipation factor and being excellent in terms of heat resistance, stiffness and impact resistance and a member for an antenna made from such a resin composition, at a low cost.

When a polystyrenic resin is blended into a general-purpose polycarbonate resin, the dissipation factor becomes low, but the impact resistance significantly deteriorates. Therefore, an elastomer is added thereto to improve the impact resistance, but there is a problem in that excessive addition thereof leads to the deterioration in terms of strength, stiffness and heat resistance.

[Solution to Problem]

The present inventors have repeated intensive studies to solve the above-described problem, consequently found that a specific polycarbonate resin composition, obtained by blending a polystyrenic resin (B) and an elastomer (C) into a polycarbonate resin (A), is capable of solving the above-described problem and completed the present invention.

The present invention relates to the following polycarbonate resin composition and a member for an antenna.

1. A polycarbonate resin composition comprising, relative to 100 parts by mass of a polycarbonate resin (A), 30 to 150 parts by mass of a polystyrenic resin (B), and 3 to 60 parts by mass of an elastomer (C), wherein a melt viscosity ratio ($\eta$A/$\eta$B) of the polycarbonate resin (A) to the polystyrenic resin (B) at 260°C and 1216 sec$^{-1}$ is within a range of 4.5 to 12.5.

2. The polycarbonate resin composition according to 1, wherein the elastomer (C) is one or two or more selected from a butadiene/methyl (meth)acrylate copolymer, a butadiene/methyl (meth)acrylate/styrene copolymer and a styrene/ethylene/butylene/styrene copolymer.

3. The polycarbonate resin composition according to 1 or 2, wherein a dielectric dissipation factor at a frequency of 5.8 GHz is 0.0040 or less.

4. The polycarbonate resin composition according to any one of 1 to 3, wherein a ratio [(B)/(C)] of contents of the polystyrenic resin (B) to the elastomer (C) is 9 or less.

5. The polycarbonate resin composition according to any one of 1 to 4, wherein an acrylonitrile-butadiene-styrene copolymer is not contained, or when contained, a content thereof is 10 parts by mass or less relative to 100 parts by mass of the polycarbonate resin (A) .

6. A molded article of the polycarbonate resin composition according to any one of 1 to 5.

7. A member for an antenna which utilizes an electromagnetic wave with a frequency of 1 GHz or more, made from a polycarbonate resin composition having a dielectric dissipation factor of 0.0040 or less at a frequency of 5.8 GHz comprising 30 to 150 parts by mass of a polystyrenic resin (B) and 3 to 60 parts by mass of an elastomer (C) relative to 100 parts by mass of a polycarbonate resin (A).

8. The member for an antenna according to 7, wherein the elastomer (C) is one or two or more selected from a butadiene/methyl (meth)acrylate copolymer, a butadiene/methyl (meth)acrylate/styrene copolymer and a styrene/ethylene/butylene/styrene copolymer.

9. The member for an antenna according to 7 or 8, wherein a ratio [(B)/(C)] of contents of the polystyrenic resin (B) to the elastomer (C) of the polycarbonate resin composition is 9 or less.

10. The member for an antenna according to any one of 7 to 9, wherein an acrylonitrile-butadiene-styrene copolymer is not contained, or when contained, a content thereof is 10 parts by mass or less relative to 100 parts by mass of the polycarbonate resin (A) .

[Advantageous Effects of Invention]

The polycarbonate resin composition of the present invention is low in cost, is excellent in terms of impact resistance, toughness, stiffness and heat resistance, has both a low relative permittivity and a low dielectric dissipation factor, and has a small transmission attenuation of an electromagnetic wave. Therefore, the polycarbonate resin composition is suitable as an electronic and electrical equipment part capable of dealing even with a high-frequency band such as 5G or 6G, particularly, an antenna base material or an antenna cover, can be particularly suitably used as a member for an antenna in which, particularly, an electromagnetic wave having a frequency of 1 GHz or higher is used, and enables the reliability of an electromagnetic wave to be sufficiently ensured.

[Description of Embodiments]

Hereinafter, the present invention will be described in detail by showing an embodiment, an illustrated article or the like.

In the present specification, unless particularly otherwise described, "to" is used to mean to include numerical values shown therebefore and thereafter as the lower limit value and the upper limit value.

[1] A polycarbonate resin composition comprising, relative to 100 parts by mass of a polycarbonate resin (A), 30 to 150 parts by mass of a polystyrenic resin (B), and 3 to 60 parts by mass of an elastomer (C),
wherein a melt viscosity ratio ($\eta$A/$\eta$B) of the polycarbonate resin (A) to the polystyrenic resin (B) at 260°C and 1216 sec$^{-1}$ is within a range of 4.5 to 12.5.

Hereinafter, each component or the like that is used in the polycarbonate resin composition of the present invention and constitutes the polycarbonate resin composition will be described in detail.

[Polycarbonate resin (A)]

Specific kinds of polycarbonate resin are not particularly limited, and examples thereof include polycarbonate polymers obtained by reacting a dihydroxy compound and a carbonate precursor. At this time, a polyhydroxy compound or the like may be made to be reacted in addition to the dihydroxy compound and the carbonate precursor. In addition, a method in which carbon dioxide is used as the carbonate precursor and reacted with a cyclic ether may also be used. In addition, the polycarbonate polymer may be a straight chain or a branched chain. Furthermore, the polycarbonate polymer may be a homopolymer composed of one kind of repeating unit or a copolymer having two or more kinds of repeating units. At this time, a variety of copolymerization forms such as a random copolymer and a block copolymer can be selected as the copolymer. Normally, such a polycarbonate polymer becomes a thermoplastic resin.

In addition, the polycarbonate resin can be classified into aromatic polycarbonate resin in which carbon that directly bonds to a carbonic acid bond is each aromatic carbon and aliphatic polycarbonate resin in which the carbon is aliphatic carbon, and any polycarbonate resin can also be used. Among them, aromatic polycarbonate resin is preferable from the viewpoint of heat resistance, mechanical properties, electrical characteristics and the like.

Among the monomers that act as the raw material of the aromatic polycarbonate resin, examples of aromatic dihydroxy compounds include

dihydroxybenzenes such as 1,2-dihydroxybenzene, 1,3-dihydroxybenzene (that is, resorcinol) and 1,4-dihydroxybenzene;
dihydroxybiphenyls such as 2,5-dihydroxybiphenyl, 2,2'-dihydroxybiphenyl and 4,4'-dihydroxybiphenyl;
dihydroxynaphthalenes such as 2,2'-dihydroxy-1,1'-binaphthyl, 1,2-dihydroxynaphthalene, 1,3-dihydroxynaphthalene, 2,3-dihydroxynaphthalene, 1,6-dihydroxynaphthalene, 2,6-dihydroxynaphthalene, 1,7-dihydroxynaphthalene and 2,7-dihydroxynaphthalene;
dihydroxydiaryl ethers such as 2,2'-dihydroxydiphenyl ether, 3,3'-dihydroxydiphenyl ether, 4,4'-dihydroxydiphenyl ether, 4,4'-dihydroxy-3,3'-dimethyldiphenyl ether, 1,4-bis(3-hydroxyphenoxy)benzene and 1,3-bis(4-hydroxyphenoxy)benzene;
bis(hydroxyaryl)alkanes such as 2,2-bis(4-hydroxyphenyl)propane (that is, bisphenol A),
1,1-bis(4-hydroxyphenyl)propane,
$\alpha$,$\alpha$'-bis(4-hydroxyphenyl)-1,4-diisopropylbenzene,
1,3-bis[2-(4-hydroxyphenyl)-2-propyl]benzene,
bis(4-hydroxyphenyl)methane,
bis(4-hydroxyphenyl)cyclohexylmethane,
bis(4-hydroxyphenyl)phenylmethane,
bis(4-hydroxyphenyl)(4-propenylphenyl)methane,
bis(4-hydroxyphenyl)diphenylmethane,
bis(4-hydroxyphenyl)naphthylmethane,
1,1-bis(4-hydroxyphenyl)ethane,
1,1-bis(4-hydroxyphenyl)-1-phenylethane (that is, bisphenol AP),
1,1-bis(4-hydroxyphenyl)-1-naphthylethane,
1,1-bis(4-hydroxyphenyl)butane,
2,2-bis(4-hydroxyphenyl)butane,
2,2-bis(4-hydroxyphenyl)pentane,
1,1-bis(4-hydroxyphenyl)hexane,
2,2-bis(4-hydroxyphenyl)hexane,
1,1-bis(4-hydroxyphenyl)octane,
2,2-bis(4-hydroxyphenyl)octane,
4,4-bis(4-hydroxyphenyl)heptane,
2,2-bis(4-hydroxyphenyl)nonane,
1,1-bis(4-hydroxyphenyl)decane and
1,1-bis(4-hydroxyphenyl)dodecane;

cardo structure-containing bisphenols such as 9,9-bis(4-hydroxyphenyl)fluorene and 9,9-bis(4-hydroxy-3-methylphenyl)fluorene;

dihydroxydiaryl sulfides such as 4,4'-dihydroxydiphenyl sulfide and 4,4'-dihydroxy-3,3'-dimethyldiphenyl sulfide;

dihydroxydiaryl sulfoxides such as 4,4'-dihydroxydiphenyl sulfoxide and 4,4'-dihydroxy-3,3'-dimethyldiphenyl sulfoxide;

dihydroxydiarylsulfones such as 4,4'-dihydroxydiphenylsulfone and 4,4'-dihydroxy-3,3'-dimethyldiphenylsulfone;

and the like.

Among these, the bis(hydroxyaryl)alkanes are preferable, bis(4-hydroxphenyl)alkanes are more preferable, and 2,2-bis(4-hydroxphenyl)propane (that is, bisphenol A) is particularly preferable from the viewpoint of impact resistance and heat resistance.

The aromatic dihydroxy compounds may be used singly or two or more thereof may be jointly used in an arbitrary combination and an arbitrary ratio.

Among the monomers that act as the raw material of the aromatic polycarbonate resin, carbonyl halides, carbonate esters and the like are used as the examples of the carbonate precursor. The carbonate precursors may be used singly or two or more thereof may be jointly used in an arbitrary combination and an arbitrary ratio.

Specific examples of the carbonyl halides include phosgene; haloformates such as bischloroformates of a dihydroxy compound and monochloroformates of a dihydroxy compound; and the like.

Specific examples of the carbonate esters include diaryl carbonates such as diphenyl carbonate and ditolyl carbonate; dialkyl carbonates such as dimethyl carbonate and diethyl carbonate; biscarbonates of dihydroxy compounds, monocarbonate bodies of a dihydroxy compound, carbonate bodies of a dihydroxy compound such as cyclic carbonates and the like.

A method for producing the polycarbonate resin is not particularly limited, and an arbitrary method can be adopted. Examples thereof include an interfacial polymerization method, a melt transesterification method, a pyridine method, a ring-opening polymerization method of a cyclic carbonate compound, a solid-phase transesterification method of a prepolymer and the like.

The molecular weight of the polycarbonate resin may be arbitrarily selected and determined, and the viscosity-average molecular weight Mv is normally 10000 or more, preferably 14000 or more and more preferably 16000 or more and is normally 40000 or less and preferably 30000 or less. When the viscosity-average molecular weight is made to be the lower limit value of the above range or more, it is possible to further improve the mechanical strength of the resin composition. On the other hand, when the viscosity-average molecular weight is made to be the upper limit value of the above range or less, it is possible to improve the fluidity of the resin composition by suppressing the deterioration thereof, and the resin composition can be made to be easily molded by enhancing the moldability.

Two or more polycarbonate resins having different viscosity-average molecular weights may be mixed together and used, and in such a case, a polycarbonate resin having a viscosity-average molecular weight outside the above-described suitable range may also be mixed.

The polycarbonate resin also preferably contains a high-molecular-weight polycarbonate resin, for example, preferably a polycarbonate resin having a viscosity-average molecular weight Mv of 50000 to 95000. The viscosity-average molecular weight of the high-molecular-weight polycarbonate resin is more preferably 55000 or more, still more preferably 60000 or more, especially 61000 or more and particularly 62000 or more and is more preferably 90000 or less, still more preferably 85000 or less, far still more preferably 80000 or less, especially preferably 75000 or less and particularly preferably 70000 or less.

In the case of the high-molecular-weight polycarbonate resin being contained, the content of the high-molecular-weight polycarbonate resin in the polycarbonate resin is preferably 5 mass% or more, more preferably 10 mass% or more and still more preferably 15 mass% or more. The upper limit is preferably 40 mass% or less and more preferably 30 mass% or less.

In the present invention, the viscosity-average molecular weight Mv of the polycarbonate resin means a value that is calculated from Schnell's viscosity formula, that is,

$$\eta = 1.23 \times 10^{-4} Mv^{0.83}$$

after the intrinsic viscosity [η] (unit: dl/g) at 25°C is obtained using methylene chloride as a solvent and an Ubbelohde viscometer.

In addition, the intrinsic viscosity [η] refers to a value calculated from the following formula after the specific viscosity [$\eta_{sp}$] at each solution concentration [C] (g/dl) is measured.

$$\eta = \lim_{c \to 0} \eta_{sp} \Big/ c$$

The terminal hydroxyl group concentration of the polycarbonate resin is arbitrary, may be appropriately selected and determined, and is normally 2000 ppm or less, preferably 1500 ppm or less and more preferably 1000 ppm or less. This makes it possible to further improve the thermal stability during retention in molding and tone of the resin composition of the present invention. In addition, particularly in the polycarbonate resin produced by the melt transesterification method, the lower limit is normally 10 ppm or more, preferably 30 ppm or more and more preferably 40 ppm or more. This makes it possible to suppress a decrease in the molecular weight and to further improve the mechanical characteristics of the resin composition of the present invention.

The unit of the terminal hydroxyl group concentration is the unit of the mass of the terminal hydroxyl group relative to the mass of the polycarbonate resin expressed in ppm. A measurement method thereof is colorimetric determination by a titanium tetrachloride/acetic acid method (a method described in Macromol. Chem. 88 215 (1965)).

In addition, the polycarbonate resin may contain a polycarbonate oligomer to improve the appearance or flexibility of a molded article. The viscosity-average molecular weight Mv of this polycarbonate oligomer is normally 1500 or more and preferably 2000 or more and is normally 9500 or less and preferably 9000 or less. Furthermore, the content of polycarbonate oligomer is preferably set to 30 mass% or less of the polycarbonate resin (containing the polycarbonate oligomer).

The polycarbonate resin may also be, aside from a virgin resin, a polycarbonate resin regenerated from a used product (so-called material-recycled polycarbonate resin) or a polycarbonate resin produced from a polycarbonate resin that has been chemically decomposed and returned to a raw material (so-called chemical recycled-polycarbonate resin), preferably contains both a virgin resin and a recycled resin and may be composed of a recycled polycarbonate resin. In the case of containing a recycled polycarbonate resin, the proportion of the recycled polycarbonate resin in the polycarbonate resin is preferably 40% or more, 50% or more, 60% or more or 80% or more, and the proportion of the recycled polycarbonate resin is also preferably 100%.

The melt viscosity ($\eta$A) at 260°C and 1216 cm$^{-1}$ of the polycarbonate resin (A) is preferably within a range of 100 to 2000 Pa·s. The melt viscosity ratio ($\eta$A/$\eta$B) of the polycarbonate resin (A) to the polystyrenic resin (B) is within a range of 4.5 to 12.5 by bringing the viscosity difference therebetween closer, and in order to hold the toughness, the melt viscosity is more preferably 400 Pa·s or more, still more preferably 500 Pa·s or more and particularly preferably 600 Pa·s or more. In addition, the melt viscosity is more preferably 1500 Pa·s or less, still more preferably 1250 Pa·s or less and particularly preferably 1000 Pa·s or less.

[Polystyrenic resin (B)]

The polycarbonate resin composition of the present invention contains 30 to 150 parts by mass of a polystyrenic resin (B) relative to 100 parts by mass of the polycarbonate resin (A).

The polystyrenic resin is preferably a styrene homopolymer, but may be a resin obtained by copolymerizing another aromatic vinyl monomer, for example, $\alpha$-methyl styrene, paramethyl styrene, vinyl toluene, vinyl xylene or the like to an extent of, for example, less than 50 mass%.

In addition, the polystyrenic resin may be a rubber-reinforced polystyrene resin. The rubber-reinforced polystyrene resin is preferably a polystyrene resin into which a butadiene-based rubber component has been copolymerized or blended, and the amount of the butadiene-based rubber component is normally 1 mass% or more and less than 50 mass%, preferably 3 to 40 mass%, more preferably 5 to 30 mass% and still more preferably 5 to 20 mass%. The rubber-reinforced polystyrene resin is particularly preferably high impact polystyrene (HIPS).

The polystyrenic resin is particularly preferably a styrene homopolymer, high impact polystyrene or a mixture thereof.

The content of the polystyrenic resin (B) is 30 to 150 parts by mass, preferably 40 parts by mass or more, more preferably 50 parts by mass or more, still more preferably 60 parts by mass or more and particularly preferably 70 parts by mass or more and is preferably 140 parts by mass or less, more preferably 130 parts by mass or less, still more preferably 120 parts by mass or less, especially 110 parts by mass or less, 100 parts by mass or less or 95 parts by mass or less and particularly preferably 90 parts by mass or less relative to 100 parts by mass of the polycarbonate resin (A).

However, copolymers containing acrylonitrile such as an acrylonitrile-butadiene-styrene copolymer (ABS resin) tend to increase the dielectric dissipation factor and are thus preferably not contained. Even in the case of containing a copolymer containing acrylonitrile, the amount thereof is preferably 10 parts by mass or less, more preferably 7 parts by mass or less and still more preferably 5 parts by mass or less, 3 parts by mass or less, 2 parts by mass or less or 1 part by mass or less relative to 100 parts by mass of the polycarbonate resin (A).

The melt viscosity ($\eta$B) at 260°C and 1216 cm$^{-1}$ of the polystyrenic resin (B) is preferably within a range of 30 to 300 Pa·s, more preferably 40 Pa·s or more, still more preferably 50 Pa·s or more and particularly preferably 60 Pa·s or more. In addition, the melt viscosity ($\eta$B) is more preferably 250 Pa·s or less, still more preferably 200 Pa·s or less and particularly preferably 150 Pa·s or less.

In the present invention, the melt viscosity ratio ($\eta$A/$\eta$B) of the melt viscosity $\eta$A of the polycarbonate resin (A) to the melt viscosity $\eta$B of the polystyrenic resin (B) at 260°C and 1216 sec$^{-1}$ is within a range of 4.5 to 12.5. When the melt viscosity ratio is made to be within such a range by decreasing the difference in the melt viscosity between the polycarbonate resin (A) and the polystyrenic resin (B), the compatibility of both improves, and it is possible to improve the impact resistance.

$\eta$A/$\eta$B is preferably 6.0 or more, more preferably 7.0 or more, still more preferably 8.0 or more and particularly preferably 9.0 or more and is preferably 12.0 or less, more preferably 11.5 or less, still more preferably 11.0 or less and particularly preferably 10.5 or less.

The melt viscosities of the polycarbonate resin (A) and the polystyrenic resin (B) at 260°C and 1216 sec$^{-1}$ are values that are measured using a capillary rheometer according to ISO 11443. Specifically, the melt viscosity can be calculated from stress generated when a piston is pressed into a furnace body having an inner diameter of 9.55 mm heated to 260°C at a piston speed of a rate of 100 mm/min using an orifice having a capillary diameter of 1 mm and a capillary length of 10 mm.

[Elastomer (C)]

As the elastomer, a copolymer obtained by graft copolymerization of a rubber component and a monomer component that can be copolymerized with the rubber component is preferable. A method for producing such a graft copolymer may be any of production methods such as bulk polymerization, solution polymerization, suspension polymerization and emulsion polymerization, and a copolymerization method may be single-stage grafting or multistage grafting.

For the rubber component, the glass transition temperature is normally 0°C or lower, particularly, preferably -20°C or lower and still more preferably -30°C or lower. Specific examples of the rubber component include polybutadiene rubber, polyisoprene rubber or hydrogenated products thereof, butadiene-acrylic composite rubber, styrene-butadiene rubber, ethylene-$\alpha$-olefin rubbers such as ethylene-propylene rubber, ethylene-butene rubber, ethylene-octene rubber, ethylene-acrylic rubber and the like. These may be used singly or two or more thereof may be mixed and used. Among them, polybutadiene rubber, polyisoprene rubber and hydrogenated products thereof, styrene-butadiene rubber are preferable.

The rubber component is not preferably polyalkyl acrylate rubber such as polybutyl acrylate, poly(2-ethylhexyl acrylate) or a butyl acrylate/2-ethylhexyl acrylate copolymer or silicone-based rubber such as organopolysiloxane rubber since the dielectric dissipation factor is likely to increase.

Specific examples of the monomer component that can be graft-copolymerized with the rubber component include epoxy group-containing (meth)acrylic acid ester compounds such as aromatic vinyl compounds, vinyl cyanide compounds, (meth)acrylic acid ester compounds, (meth)acrylic acid compounds and glycidyl (meth)acrylate; maleimide compounds such as maleimide, N-methylmaleimide and N-phenylmaleimide; $\alpha$,$\beta$-unsaturated carboxylic acid compounds such as maleic acid, phthalic acid and itaconic acid, anhydrides thereof (for example, maleic anhydride and the like) and the like. These monomer components may be used singly or two or more thereof may be jointly used. Among these, the aromatic vinyl compounds and the(meth)acrylic acid ester compounds are preferable, and styrene, methyl (meth)acrylate, ethyl (meth)acrylate, butyl (meth)acrylate, cyclohexyl (meth)acrylate, octyl (meth)acrylate and the like can be preferably exemplified.

The elastomer is preferably a core/shell-type graft copolymer-type elastomer. Particularly, a core/shell-type graft copolymer composed of a core layer containing at least one rubber component selected from polybutadiene-containing rubber, ethylene/butylene rubber and polybutyl acrylate-containing rubber and a shell layer formed by copolymerizing (meth)acrylic acid ester on the circumference of the core layer is preferable, and a core/shell-type elastomer containing butadiene-based rubber in the core is particularly preferable. In the core/shell-type graft copolymer, 40 mass% or more of the rubber component is preferably contained, and 60 mass% or more of the rubber component is more preferably contained. In addition, 10 mass% or more of a (meth)acrylic acid component is preferably contained.

Preferable specific examples of these core/shell-type graft copolymers preferably include a butadiene/methyl (meth)acrylate copolymer (MB), a butadiene/methyl (meth)acrylate/styrene copolymer (MBS), a styrene/ethylene/butylene/styrene copolymer (SEBS) and the like, and a butadiene/methyl (meth)acrylate copolymer (MB), a butadiene/methyl (meth)acrylate/styrene copolymer (MBS) and a styrene/ethylene/butylene/styrene copolymer (SEBS) are more preferable.

The content of the elastomer (C) is 3 to 60 parts by mass relative to 100 parts by mass of the polycarbonate resin (A). When such an amount of the elastomer is contained, it is possible to make the impact resistance, stiffness and heat resistance of the polycarbonate resin composition, and furthermore, the relative permittivity and the dielectric dissipation factor favorable in a well-balanced manner. The content of the elastomer (C) is preferably 5 parts by mass or more, more preferably 7.5 parts by mass or more, still more preferably 10 parts by mass or more and particularly preferably 15 parts by mass or more and is preferably 55 parts by mass or less, more preferably 50 parts by mass or less, still more preferably 45 parts by mass or less, 40 parts by mass or less, 35 parts by mass or less or 30 parts by mass or less and particularly preferably 25 parts by mass or less.

In addition, the ratio [the content of the polystyrenic resin (B)/the content of the elastomer (C)] of the content of the polystyrenic resin (B) to the content of the elastomer (C) in the polycarbonate resin composition is preferably 9 or less since the notched Charpy impact strength value becomes high.

[Stabilizer]

The polycarbonate resin composition of the present invention preferably contains a stabilizer, and the stabilizer is preferably a phosphorus stabilizer (heat stabilizer) or a phenolic stabilizer (antioxidant).

As the phosphorus stabilizer, a well-known arbitrary stabilizer can be used. Specific examples thereof include oxoacids of phosphorus such as phosphoric acid, phosphonic acid, phosphorous acid, phosphinic acid and polyphosphoric acid; metal acid pyrophosphates such as sodium acid pyrophosphate, potassium acid pyrophosphate and calcium acid pyrophosphate; phosphates of Group 1 or Group 2B metal such as potassium phosphate, sodium phosphate, cesium phosphate and zinc phosphate; organic phosphate compounds, organic phosphite compounds, organic phosphonite compounds and the like, and the organic phosphite compounds are particularly preferable.

Examples of the organic phosphite compounds include triphenyl phosphite, tris(monononylphenyl) phosphite, tris(monononyl/dinonyl phenyl) phosphite, tris(2,4-di-tert-butylphenyl) phosphite, monooctyldiphenyl phosphite, dioctyl monophenyl phosphite, monodecyldiphenyl phosphite, didecyl monophenyl phosphite, tridecyl phosphite, trilauryl phosphite, tristearyl phosphite, 2,2-methylenebis(4,6-di-tert-butylphenyl)octyl phosphite and the like.

Specific examples of these organic phosphite compounds include "ADK STAB 1178", "ADK STAB 2112" and "ADK STAB HP-10" manufactured by Adeka Corporation, "JP-351", "JP-360" and "JP-3CP" manufactured by Johoku Chemical Co., Ltd., "IRGAFOS 168" manufactured by BASF and the like.

One phosphorus stabilizer may be contained or two or more phosphorus stabilizers may be contained in an arbitrary combination and an arbitrary ratio.

The content of the phosphorus stabilizer is preferably 0.01 parts by mass or more and more preferably 0.03 parts by mass or more and is normally 1 part by mass or less, preferably 0.7 parts by mass or less and more preferably 0.5 parts by mass or less relative to 100 parts by mass of the polycarbonate resin (A). In a case where the content of the phosphorus stabilizer is less than the lower limit value of the above range, there is a possibility that a heat stabilization effect may become insufficient, and in a case where the content of the phosphorus stabilizer is more than the upper limit value of the above range, there is a possibility that the effect may hit the ceiling and the containing of the phosphorus stabilizer may become non-economic.

Examples of the phenolic stabilizer include hindered phenolic antioxidants. Specific examples thereof include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphonate, 3,3',3'',5,5',5''-hexa-tert-butyl-a,a',a''-(mesitylene-2,4,6-tolyl)tri-p-cresol, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 2,6-di-tert-butyl-4-(4,6-bis(octylthio)-1,3,5-triazin-2-ylamino)phenol, 2-[1-(2-hydroxy-3,5-di-tert-pentylphenyl)ethyl]-4,6-di-tert-pentylphenyl acrylate and the like.

Among these, pentaerythritol tetrakis[3-(3,5-di-tert-butyl-4-hydroxyphenyl)propionate] and octadecyl-3-(3,5-di-tert-butyl-4-hydroxyphenyl)propionate are preferable. Specific examples of these phenolic oxidants include "IRGANOX 1010" and "IRGANOX 1076" manufactured by BASF, "ADK STAB AO-50" and "ADK STAB AO-60" manufactured by Adeka Corporation and the like.

One phenolic stabilizer may be contained or two or more phenolic stabilizers may be contained in an arbitrary combination and an arbitrary ratio.

The content of the phenolic stabilizer is preferably 0.01 parts by mass or more and is normally 1 part by mass or less and preferably 0.5 parts by mass or less relative to 100 parts by mass of the polycarbonate resin (A). When the content of the phenolic stabilizer is made to be the lower limit value of the above range or more, it is possible to sufficiently obtain the effect of the phenolic stabilizer. In addition, when the content of the phenolic stabilizer exceeds the upper limit of the range, the effect hits the ceiling, and the containing of the phenolic stabilizer becomes non-economic.

[Mold-release agent]

The polycarbonate resin composition of the present invention preferably contains a mold-release agent. Examples of the mold-release agent include aliphatic carboxylic acids, esters of an aliphatic carboxylic acid and an alcohol, aliphatic hydrocarbon compounds having a number average molecular weight of 200 to 15000, polysiloxane-based silicone oils and the like.

Examples of the aliphatic carboxylic acids include saturated or unsaturated aliphatic monovalent, divalent or trivalent carboxylic acids. Here, the aliphatic carboxylic acids also include alicyclic carboxylic acids. Among these, preferable aliphatic carboxylic acids are monovalent or divalent carboxylic acids having six to 36 carbon atoms, and aliphatic saturated monovalent carboxylic acids having six to 36 carbon atoms are more preferable. Specific examples of such aliphatic carboxylic acids include palmitic acid, stearic acid, caproic acid, capric acid, lauric acid, arachic acid, behenic acid, lignoceric acid, cerotic acid, melissic acid, tetratriacontanoic acid, montanic acid, adipic acid, azelaic acid and the like.

As the aliphatic carboxylic acid in the esters of an aliphatic carboxylic acid and an alcohol, for example, the same carboxylic acids as the above-described aliphatic carboxylic acids can be used. On the other hand, examples of the alcohol include saturated or unsaturated monovalent or polyvalent alcohols. These alcohols may have a substituent such as a fluorine atom or an aryl group. Among these, monovalent or polyvalent saturated alcohols having 30 or less carbon atoms are preferable, and aliphatic saturated monovalent alcohols or aliphatic saturated polyvalent alcohols having 30 or less carbon atoms are more preferable. Here, aliphatic is used as a term to include alicyclic compounds as well.

Specific examples of such alcohols include octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, dipentaerythritol and the like.

The esters may contain the aliphatic carboxylic acid and/or the alcohol as an impurity. In addition, the esters may be pure substances or mixtures of a plurality of compounds. Furthermore, the aliphatic carboxylic acid and the alcohol that bond to each other and constitute one ester may be singly used or two or more thereof may be jointly used in an arbitrary combination and an arbitrary ratio.

Specific examples of the esters of an aliphatic carboxylic acid and an alcohol include beeswax (mixture containing myricyl palmitate as a main component), stearyl stearate, behenyl behenate, stearyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate, pentaerythritol tetrastearate and the like.

Examples of aliphatic hydrocarbons having a number average molecular weight of 200 to 15000 include liquid paraffin, paraffin wax, micro wax, polyethylene wax, Fischer-Tropsch wax, $\alpha$-olefin oligomers having three to 12 carbon atoms and the like. Here, alicyclic hydrocarbons are also included in the aliphatic hydrocarbons. In addition, these hydrocarbons may be partially oxidized.

Among these, the paraffin wax, the polyethylene wax or partial oxides of the polyethylene wax are preferable, and the paraffin wax and the polyethylene wax are more preferable.

In addition, the number average molecular weight of the aliphatic hydrocarbon is preferably 5000 or less.

The aliphatic hydrocarbon may be a single substance and still can be used even when the aliphatic hydrocarbon is a mixture of substances having a variety of constituents or molecular weights as long as the main component is within the above range.

Examples of the polysiloxane-based silicone oils include dimethyl silicone oil, methylphenyl silicone oil, diphenyl silicone oil, fluorinated alkyl silicone and the like.

The above-described mold-release agents may be singly contained or two or more thereof may be contained in an arbitrary combination and an arbitrary ratio.

The content of the mold-release agent is normally 0.001 parts by mass or more and preferably 0.01 parts by mass or more and is normally 2 parts by mass or less and preferably 1 part by mass or less relative to 100 parts by mass of the polycarbonate resin (A). In a case where the content of the mold-release agent is less than the lower limit value of the above range, there are cases where the effect of the mold-release property is not sufficient. In a case where the content of the mold-release agent is more than the upper limit value of the above range, there is a possibility that deterioration of the hydrolysis resistance, mold contamination during injection molding or the like may be caused.

[Additive or the like]

The polycarbonate resin composition may contain a different additive other than the above-described components, for example, an additive such as an ultraviolet absorber, a filler, a reinforcing material (a carbon fiber or a glass fiber), a pigment, a dye, a flame retardant, an antistatic agent, a plasticizer or a compatibilizer or a different resin other than the polycarbonate resin (A) and the polystyrenic resin (B). One or two or more of these additives or different resins may be blended.

In the case of containing the different resin other than the polycarbonate resin (A) and the polystyrenic resin (B), the content thereof is preferably set to 40 parts by mass or less, more preferably set to 30 parts by mass or less, still more preferably set to 20 parts by mass or less or 10 parts by mass or less and particularly preferably set to 5 parts by mass or less relative to 100 parts by mass of the polycarbonate resin (A).

[Method for producing polycarbonate resin composition]

A method for producing the polycarbonate resin composition is not limited, a well-known method for producing a polycarbonate resin composition can be broadly adopted, and a method in which each essential component and the other components that are blended as necessary are mixed in advance using a variety of mixers, for example, a tumbler or a Henschel mixer and then melt-kneaded with a mixer such as a Banbury mixer, a roll, a Brabender, a single screw extruder, a twin screw extruder or a kneader is exemplified. The temperature of the melt kneading is not particularly limited, but is normally within a range of 240°C to 320°C.

Pellets obtained by pelletizing the above-described polycarbonate resin composition are molded by a variety of molding methods, whereby a molded article can be produced. In addition, the resin melt-kneaded with an extruder can also be directly molded without producing pellets and thereby made into a molded article.

As a method for producing a molded article, a molding method that is generally adopted regarding polycarbonate resin compositions can be arbitrarily adopted. Examples thereof include an injection molding method, an ultra-high speed injection molding method, an injection compression molding method, a two-color molding method, a hollow molding method such as gas-assist molding, a molding method using a heat-insulating mold, a molding method using a rapid heating mold, foam molding (including supercritical fluids), insert molding, an IMC (in-mold coating molding) molding method, an extrusion molding method, a sheet molding method, a thermoforming method, a rotation molding method, a lamination molding method, a press molding method, a blow molding method and the like. In addition, a molding method using a hot runner method can also be used.

Among these, injection molding methods such as the injection molding method, the ultra-high speed injection molding method and the injection compression molding method are preferable.

Furthermore, a hard coat layer may be provided on the surface of the molded article. As a hard coat agent for forming the hard coat layer, a well-known material can be appropriately used, and it is possible to use a variety of hard coat agents, for example, a silicone-based hard coat agent, an acrylic hard coat agent, a silazane-based hard coat agent, a urethane-based hard coat agent and the like. The hard coat agent may be a two-coat-type hard coat agent that provides a primer layer before the application of the hard coat agent in order to improve adhesiveness or weather resistance. A coating method of the hard coat agent is not particularly limited, and the hard coat agent can also be applied by any coating method such as spray coating, dip coating, flow coating, spin coating, bar coating, curtain coating, die coating, gravure coating, roll coating, blade coating or air knife coating.

The thickness of the hard coat layer is preferably 1 to 50 um and more preferably 5 to 30 pm.

The polycarbonate resin composition of the present invention has a small dielectric dissipation factor, and the dielectric dissipation factor at a frequency of 5.8 GHz is preferably 0.0040 or less, more preferably 0.0038 or less, still more preferably 0.0036 or less and particularly preferably 0.0034 or less.

In addition, the polycarbonate resin composition of the present invention also has a small relative permittivity, and the relative permittivity is preferably 2.8 or less, more preferably 2.7 or less and still more preferably 2.6 or less.

The details of specific methods for measuring the dielectric dissipation factor and the relative permittivity are as described in examples.

The polycarbonate resin composition of the present invention has excellent heat resistance, and the deflection temperature under load, which serves as an index thereof, is preferably higher than 86°C, more preferably higher than 90°C and still more preferably 92°C or higher. The deflection temperature under load is measured according to ISO 75-2, and the detail of a specific measurement method thereof is as described in the examples.

The polycarbonate resin composition of the present invention has excellent impact resistance, and the Charpy impact strength is preferably NB (nonbreak) with no notches or 10 kJ/m$^2$ or higher with a notch. The Charpy impact strength is measured according to ISO 179-1 and 2, and the detail of a specific measurement method thereof is as described in the examples.

The polycarbonate resin composition of the present invention has excellent stiffness, and it is preferable that the bending modulus is 2000 MPa or higher and the bending strength is 67 MPa or higher. The bending modulus and the bending strength are measured according to ISO 178, and the details of specific measurement methods thereof are as described in the examples.

Furthermore, the polycarbonate resin composition of the present invention has excellent toughness, and the nominal tensile strain at break is preferably 20% or more. The nominal tensile strain at break is measured according to ISO 527, and the detail of a specific measurement method thereof is as described in the examples.

The polycarbonate resin composition of the present invention is preferably suitably used particularly in an electronic and electrical equipment part in which an electromagnetic wave having a frequency of 1 GHz or higher is used. An electronic and electrical equipment part composed of the polycarbonate resin composition of the present invention can be used in a wide range of bands the frequency of which is 1 GHz or higher. The electronic and electrical equipment part can be applied to a frequency band of up to 52.6 GHz, which is the 5G radio communication standard "NR", up to approximately 90 GHz, which is being studied to be used in the future 5G evolution, or the subterahertz wave, which is 90 G to 300 GHz for 6G. It is needless to say that the electronic and electrical equipment part is also suitable for the existing low frequency bands or a band of 10 to 20 GHz, which is a 6G low-band/mid-band.

Examples of electronic and electrical equipment parts for which the molded article of the polycarbonate resin composition of the present invention can be used include parts for chassis for electronic and electrical equipment, circuit boards, semiconductor interlayer insulating films, antenna parts (substrates, antenna covers and radar covers), insulating material resistors for high frequency coaxial cables, base parts such as switches, capacitors and photosensors, IC sockets and connectors, transportation equipment such as automobiles, bicycles, motorcycles, trucks, railroad vehicles, helicopters and aircrafts, construction machinery such as bulldozers, hydraulic excavators and cranes, ships such as merchant ships, special purpose ships, fishing boats and naval vessels, agricultural machinery such as tractors and harvesters, smartphones, tablets, wearable devices, computers, television receivers, VR goggles, cameras, speakers, drones, robots, sensors, medical equipment, analytical equipment and the like, and the electronic and electrical equipment parts are particularly suitable as antenna substrates, antenna covers and radar covers.

Antenna covers and radar covers are housings, antenna covers (radomes) or the like that store or protect antenna modules that send or receive electromagnetic waves, and furthermore, also include members and the like that are installed on the paths of electromagnetic waves that are sent from or received by the radar modules.

[2] A member for an antenna which utilizes an electromagnetic wave with a frequency of 1 GHz or more, made from a polycarbonate resin composition having a dielectric dissipation factor of 0.0040 or less at a frequency of 5.8 GHz comprising 30 to 150 parts by mass of a polystyrenic resin (B) and 3 to 60 parts by mass of an elastomer (C) relative to 100 parts by mass of a polycarbonate resin (A).

Hereinafter, each component or the like that constitutes a polycarbonate resin composition that is used in the member for an antenna of the second invention will be described in detail.

The polycarbonate resin (A) that is used in the resin composition of the member for an antenna of the second invention is the same as the polycarbonate resin (A) that is used in the above-described resin composition of the first invention, and a preferable range, including the content, is also the same.

The polystyrenic resin (B) that is used in the resin composition of the member for an antenna of the second invention is the same as the polystyrenic resin (B) that is used in the above-described resin composition of the first invention, and a preferable range, including the content, is also the same.

The elastomer (C) that is used in the resin composition of the member for an antenna of the second invention is the same as the elastomer (C) that is used in the above-described resin composition of the first invention, and a preferable range, including the content, is also the same.

The resin composition for the member for an antenna of the second invention preferably contains a stabilizer, the stabilizer is the same as the stabilizer described in the resin composition of the first invention, and a preferable range, including the content, is also the same.

The resin composition for the member for an antenna of the second invention preferably contains a mold-release agent, the mold-release agent is the same as the mold-release agent described in the resin composition of the first invention, and a preferable range, including the content, is also the same.

A different additive, resin or the like that can be contained in the resin composition for the member for an antenna of the second invention is the same as the additive, the resin or the like described in the resin composition of the first invention, and a preferable range, including the content, is also the same.

A method for producing the resin composition for the member for an antenna of the second invention is the same as the method for producing the resin composition of the first invention. In addition, a method for producing a molded article is the same as the method for producing the molded article of the first invention.

Furthermore, the same hard coat layer as described in the molded article of the first invention may also be provided on a surface of the molded article.

The polycarbonate resin composition that is used in the second invention has a small dielectric dissipation factor, and the dielectric dissipation factor at a frequency of 5.8 GHz is preferably 0.0040 or less, more preferably 0.0038 or less, still more preferably 0.0036 or less and particularly preferably 0.0034 or less. The relative permittivity of the polycarbonate resin composition that is used in the second invention is also small, and the relative permittivity is preferably 2.8 or less, more preferably 2.7 or less and still more preferably 2.6 or less. Specific methods for measuring the dielectric dissipation factor and the relative permittivity are as described in the examples.

The polycarbonate resin composition that is used in the second invention has excellent heat resistance, and the deflection temperature under load, which serves as an index thereof, is preferably higher than 86°C, more preferably higher than 90°C and still more preferably 92°C or higher. The deflection temperature under load is measured according to ISO 75-2, and the detail of a specific measurement method thereof is as described in the examples.

The polycarbonate resin composition that is used in the second invention has excellent impact resistance, and the Charpy impact strength is preferably NB (nonbreak) with no notches or 10 kJ/m$^2$ or higher with a notch. The Charpy impact strength is measured according to ISO 179-1 and 2, and the detail of a specific measurement method thereof is as described in the examples.

The polycarbonate resin composition that is used in the second invention has excellent stiffness, and it is preferable that the bending modulus is 2000 MPa or higher and the bending strength is 67 MPa or higher. The bending modulus and the bending strength are measured according to ISO 178, and the details of specific measurement methods thereof are as described in the examples.

Furthermore, the polycarbonate resin composition that is used in the second invention has excellent toughness, and the nominal tensile strain at break is preferably 20% or more. The nominal tensile strain at break is measured according to ISO 527, and the detail of a specific measurement method thereof is as described in the examples.

A molded article composed of the polycarbonate resin composition that is used in the second invention is used in a member for an antenna in which an electromagnetic wave having a frequency of 1 GHz or higher is used. The member for an antenna of the present invention can be used in a wide range of bands for which the frequency is 1 GHz or higher. The molded article can be applied to a frequency band of up to 52.6 GHz, which is the 5G radio communication standard "NR", up to approximately 90 GHz, which is being studied to be used in the future 5G evolution, or the subterahertz wave, which is 90 G to 300 GHz for 6G. It is needless to say that the member for an antenna is also suitable for the existing low frequency bands or a band of 10 to 20 GHz, which is a 6G low-band/mid-band.

A member for an antenna of the second invention can be used as a part that sends or receives electromagnetic waves having a frequency of 1 GHz or higher, particularly, a substrate for an antenna, an antenna cover or a radar cover and can be suitably used in housings, antenna covers (radomes) or the like that store or protect antenna modules, and furthermore, members and the like that are installed on the paths of electromagnetic waves that are sent from or received by the radar modules.

Furthermore, the same hard coat layer as described above may also be provided on a surface of the member for an antenna of the present invention.

[Examples]

Hereinafter, the first invention and the second invention (hereinafter, collectively referred to as "present invention" in some cases) will be more specifically described using examples. However, these inventions are not interpreted to be limited to the following examples.

Raw materials used in the following examples and comparative examples are as shown in Table 1 below.

[Table 1]

| | | |
|---|---|---|
| PC resin (A) | A1 | Bisphenol A-type aromatic polycarbonate resin<br>"IUPILON S-3000" by Mitsubishi Engineering-Plastics Corp. Mv=21,000 |
| | A2 | Bisphenol A-type aromatic recycled polycarbonate resin<br>"PC2010ANC" by Shanghai Ausell Material Technology Co. Mv=22,000 |
| | A3 | Bisphenol A-type aromatic polycarbonate resin<br>"IUPILON E-2000" by Mitsubishi Engineering-Plastics Corp. Mv=27,000 |
| | A4 | Bisphenol A-type aromatic polycarbonate resin<br>"IUPILON H-4000" by Mitsubishi Engineering-Plastics Corp. Mv=16,000 |
| Styrenic resin (B) | B1 | Polystyrene resin<br>"HH102" by PS Japan Corp. Mw=$25\times10^4$ |
| | B2 | High impact polystyrene resin<br>"HT478" by PS Japan Corp. Mw=$23\times10^4$<br>Content of rubber(polybutadiene):8.8mass% |
| | B3 | Polystyrene resin<br>"HH105" by PS Japan Corp. Mw=$31\times10^4$ |
| | B4 | Polystyrene resin<br>"HF77" by PS Japan Corp. Mw=$21\times10^4$ |

(continued)

| | | | |
|---|---|---|---|
| Elastomer (C) | C1 | Core/shell-type elastomer of butadiene-based rubber core/main component of shell is methyl methacrylate "KANE ACE M711" by Kaneka Corp. | |
| | C2 | Core/shell-type elastomer of butadiene-based rubber core /main component of shell is methyl methacrylate "METABLEN E-875A" by Mitsubishi Chemical Corp. | |
| | C3 | Core/shell-type elastomer of butadiene-based rubber core /main component of shell is methyl methacrylate-styrene "KANE ACE M732" by Kaneka Corp. | |
| | C4 | Core/shell-type elastomer of butadiene-based rubber core /main component of shell is methyl methacrylate-styrene "METABLEN E-870A"by Mitsubishi Chemical Corp. | |
| | C5 | Styrene-ethylene/butyrene/styrene copolymer (SEBS) "TAIPOL SEBS-6152"by TSRC Corp. | |
| Stabilizer | D1 | Hindered phenolic stabilizer Octadecyl-3-(3,5-di-tert-butyl-4-hydroxyphenyl)propionate "Irganox 1076" by BASF | |
| | D2 | Phosphorus stabilizer Tris(2,4-di-tert-butylphenyl) phosphite "ADK STAB 2112" by Adeka Corp. | |
| Mold-release agent | E1 | Pentaerythritol tetrastearate "LXIOL VPG861" by Cognis Japan | |
| | E2 | Stearyl stearate "UNISTER M-9676" by NOF Corp. | |

(Examples 1 to 19 of first invention and Comparative Examples 1 to 4)

[Production of polycarbonate resin composition pellets]

Each component shown in Table 1 was blended in a proportion (parts by mass) shown in Tables 2 to 4 below, mixed with a tumbler for 20 minutes and then melt-kneaded at a cylinder temperature of 260°C using a twin screw extruder (manufactured by Shibaura Machine Co., Ltd., TEM26SX), and pellets of a polycarbonate resin composition were obtained by strand cutting.

<Relative permittivity and dielectric dissipation factor>

The pellets obtained by the above-described method were dried at 100°C for five hours, and a molded article that was 100 mm $\times$ 150 mm $\times$ approximately 2 mm in thickness was obtained using an injection molding machine (ROBOSHOT S-2000i 150B manufactured by Fanuc Corporation). A 100 mm $\times$ 1 mm $\times$ 2 mm flat plate-like test piece was obtained from a flat plate-like test piece obtained by the above-described method by cutting, and the relative permittivity and the dielectric dissipation factor at a frequency of 5.8 GHz were measured by a perturbation method using a network analyzer manufactured by Keysight Technologies and a cavity resonator manufactured by Kanto Electronics Application and Development Co., Ltd.

<Bending modulus and bending strength>

Pellets obtained by the above-described method were dried at 100°C for five hours, and injection molding was then performed using a NEX80 III-type injection molding machine manufactured by Nissei Plastic Industrial Co., Ltd. under conditions of a cylinder temperature of 260°C, a mold temperature of 80°C and a molding cycle of 50 seconds, thereby molding an ISO multi-purpose test piece (4 mm in thickness). A bending test was performed based on ISO-178 standards under a room temperature (23°C) condition using the obtained test piece, and the bending modulus (unit: MPa) and the bending strength (unit: MPa) were measured.

<Charpy impact strength>

Pellets obtained by the above-described method were dried at 100°C for five hours, and injection molding was then performed using a NEX80 III-type injection molding machine manufactured by Nissei Plastic Industrial Co., Ltd. under conditions of a cylinder temperature of 260°C, a mold temperature of 80°C and a molding cycle of 50 seconds, thereby fabricating a 3 mm-thick impact resistance test piece based on ISO 179-1 and 2. The Charpy impact strengths (unit: kJ/m$^2$) with no notches and with a notch were measured under a temperature environment of 23°C using the obtained test piece.

<Deflection temperature under load>

Pellets obtained by the above-described method were dried at 100°C for five hours, and injection molding was then performed using a NEX80 III-type injection molding machine manufactured by Nissei Plastic Industrial Co., Ltd. under conditions of a cylinder temperature of 260°C, a mold temperature of 80°C and a molding cycle of 50 seconds, thereby molding an ISO multi-purpose test piece (4 mm in thickness). The deflection temperature under load (unit: °C) was measured under a condition of a high load (1.80 MPa) based on ISO 75-2 using the obtained test piece and a 6A-2-type HDT measuring instrument manufactured by Toyo Seiki Seisaku-Sho, Ltd.

<Nominal tensile strain at break (unit: %)>

Pellets obtained by the above-described method were dried at 100°C for five hours, and injection molding was then performed using a NEX80 III-type injection molding machine manufactured by Nissei Plastic Industrial Co., Ltd. under conditions of a cylinder temperature of 260°C, a mold temperature of 80°C and a molding cycle of 50 seconds, thereby molding an ISO multi-purpose test piece (4 mm in thickness).
The nominal tensile strain at break (unit: %) was measured according to ISO 527 standards using the obtained test piece.
The above evaluation results are shown in Tables 2 to 4 below.

[Table 2]

| | | Example | | | | | | | |
|---|---|---|---|---|---|---|---|---|---|
| | | 1 | 2 | 3 | 4 | 5 | 6 | 7 | 8 |
| PC resin (A) | A1 | | | | | | | 100 | 100 |
| | A2 | | | | | | | | |
| | A3 | 100 | 100 | 100 | 100 | 100 | 100 | | |
| | A4 | | | | | | | | |
| Styrenic resin (B) | B1 | | | | | | | | 50 |
| | B2 | | | | | | | | |
| | B3 | 50 | 81 | 73 | 90 | 81 | 81 | | |
| | B4 | | | | | | | 81 | |
| Elastomer (C) | C1 | 17 | 20 | 9 | 34 | | | 20 | 17 |
| | C2 | | | | | | | | |
| | C3 | | | | | 20 | | | |
| | C4 | | | | | | | | |
| | C5 | | | | | | 20 | | |
| Stabilizer | D1 | 0.17 | 0.20 | 0.18 | 0.22 | 0.25 | 0.25 | 0.20 | 0.17 |
| | D2 | 0.05 | 0.06 | 0.06 | 0.07 | 0.08 | 0.08 | 0.06 | 0.05 |
| Mold-release agent | E1 | 0.50 | 0.61 | 0.55 | 0.67 | 0.76 | 0.76 | 0.61 | 0.50 |
| | E2 | 0.17 | 0.20 | 0.18 | 0.22 | 0.25 | 0.25 | 0.20 | 0.17 |

(continued)

| | Example | | | | | | | |
|---|---|---|---|---|---|---|---|---|
| | 1 | 2 | 3 | 4 | 5 | 6 | 7 | 8 |
| Melt viscosity of (A) (1216 sec$^{-1}$, Pa·s) | 1204 | 1204 | 1204 | 1204 | 1204 | 1204 | 628 | 628 |
| Melt viscosity of (B) (1216 sec$^{-1}$, Pa·s) | 117 | 117 | 117 | 117 | 117 | 117 | 69 | 94 |
| Melt viscosity ratio of (A)/(B) | 10.3 | 10.3 | 10.3 | 10.3 | 10.3 | 10.3 | 9.1 | 6.7 |
| Content ratio of (B)/(C) | 2.9 | 4.1 | 8.1 | 2.6 | 4.1 | 4.1 | 4.1 | 2.9 |
| Bending modulus (MPa) | 2300 | 2300 | 2500 | 2200 | 2400 | 2200 | 2300 | 2300 |
| Bending strength (MPa) | 80 | 84 | 89 | 76 | 86 | 78 | 83 | 81 |
| Charpy impact strength with no notches (kJ/m$^2$) | NB | NB | NB | NB | NB | NB | NB | NB |
| Charpy impact strength with notch (kJ/m$^2$) | 30 | 23 | 20 | 25 | 18 | 17 | 13 | 24 |
| Deflection temperature under load(1.80MPa,°C) | 99 | 94 | 97 | 91 | 94 | 94 | 92 | 99 |
| Relative permittivity (5.8 GHz) | 2.5 | 2.5 | 2.5 | 2.5 | 2.5 | 2.5 | 2.5 | 2.5 |
| Dielectric Dissipation factor (5.8 GHz) | 0.0038 | 0.0033 | 0.0032 | 0.0033 | 0.0033 | 0.0027 | 0.0033 | 0.0038 |
| Nominal tensile strain at break (%) | 105 | 102 | 105 | 80 | 106 | 37 | 21 | 99 |

[Table 3]

| | | | Example | | | | | | | | | | |
|---|---|---|---|---|---|---|---|---|---|---|---|---|---|
| | | | 9 | 10 | 11 | 12 | 13 | 14 | 15 | 16 | 17 | 18 | 19 |
| PC resin (A) | | A1 | 100 | 100 | 100 | 100 | 100 | 100 | | 100 | | | 100 |
| | | A2 | | | | | | | | | 100 | | |
| | | A3 | | | | | | | 100 | | | 100 | |
| | | A4 | | | | | | | | | | | |
| Styrenic resin (B) | | B1 | 81 | 73 | 90 | 81 | 81 | | | | 81 | | 101 |
| | | B2 | | | | | | | 73 | 73 | | | |
| | | B3 | | | | | | 81 | | | | 127 | |
| | | B4 | | | | | | | | | | | |
| Elastomer (C) | | C1 | 20 | 9 | 34 | | | 20 | 9 | 9 | 20 | 25 | 51 |
| | | C2 | | | | | | | | | | | |
| | | C3 | | | | 20 | | | | | | | |
| | | C4 | | | | | | | | | | | |
| | | C5 | | | | | 20 | | | | | | |
| Stabilizer | | D1 | 0.20 | 0.18 | 0.22 | 0.20 | 0.20 | 0.20 | 0.18 | 0.18 | 0.20 | 0.25 | 0.25 |
| | | D2 | 0.06 | 0.06 | 0.07 | 0.06 | 0.06 | 0.06 | 0.06 | 0.06 | 0.06 | 0.08 | 0.08 |
| Mold-release agent | | E1 | 0.61 | 0.55 | 0.67 | 0.61 | 0.61 | 0.61 | 0.55 | 0.55 | 0.61 | 0.76 | 0.76 |
| | | E2 | 0.20 | 0.18 | 0.22 | 0.20 | 0.20 | 0.20 | 0.18 | 0.18 | 0.20 | 0.25 | 0.25 |
| Melt viscosity of (A) (1216 sec$^{-1}$, Pa·s) | | | 628 | 628 | 628 | 628 | 628 | 628 | 1204 | 628 | 667 | 1204 | 628 |
| Melt viscosity of (B) (1216 sec$^{-1}$. Pa·s) | | | 94 | 94 | 94 | 94 | 94 | 117 | 99 | 99 | 94 | 117 | 94 |
| Melt viscosity ratio of (A)/(B) | | | 6.7 | 6.7 | 6.7 | 6.7 | 6.7 | 5.4 | 12.2 | 6.3 | 7.1 | 10.3 | 6.7 |
| Content ratio of (B)/(C) | | | 4.1 | 8.1 | 2.6 | 4.1 | 4.1 | 4.1 | 8.1 | 8.1 | 4.1 | 5.1 | 2.0 |
| Bending modulus (MPa) | | | 2300 | 2600 | 2200 | 2400 | 2300 | 2300 | 2000 | 2000 | 2300 | 2400 | 2000 |
| Bending strength (MPa) | | | 84 | 90 | 77 | 89 | 82 | 84 | 67 | 67 | 83 | 85 | 72 |
| Charpy impact strength with no notches (kJ/m$^2$) | | | NB | NB | NB | NB | NB | NB | NB | NB | NB | NB | NB |
| Charpy impact strength with notch (kJ/m$^2$) | | | 18 | 15 | 20 | 14 | 13 | 21 | 12 | 13 | 16 | 12 | 48 |

|  | Example | | | | | | | | | | |
|---|---|---|---|---|---|---|---|---|---|---|---|
|  | 9 | 10 | 11 | 12 | 13 | 14 | 15 | 16 | 17 | 18 | 19 |
| Deflection temperature under load(1.80MPa, °C) | 94 | 98 | 91 | 94 | 95 | 94 | 96 | 96 | 93 | 90 | 87 |
| Relative permittivity (5.8 GHz) | 2.5 | 2.5 | 2.5 | 2.5 | 2.5 | 2.5 | 2.5 | 2.5 | 2.5 | 2.5 | 2.5 |
| Dielectric Dissipation factor (5.8 GHz) | 0.0033 | 0.0032 | 0.0033 | 0.0033 | 0.0027 | 0.0033 | 0.0037 | 0.0037 | 0.0033 | 0.0029 | 0.0034 |
| Nominal tensile strain at break (%) | 23 | 24 | 21 | 23 | 21 | 20 | 109 | 112 | 22 | 14 | 15 |

EP 4 497 784 A1

[Table 4]

| | | | Comparative Example | | | |
|---|---|---|---|---|---|---|
| | | | 1 | 2 | 3 | 4 |
| PC resin (A) | | A1 | | 40 | 40 | 20 |
| | | A2 | | | | |
| | | A3 | 100 | | | |
| | | A4 | | 60 | 60 | 80 |
| Styrenic resin (B) | | B1 | 81 | 81 | | |
| | | B2 | | | | |
| | | B3 | | | 81 | 81 |
| | | B4 | | | | |
| Elastomer (C) | | C1 | 20 | 20 | 20 | 20 |
| | | C2 | | | | |
| | | C3 | | | | |
| | | C4 | | | | |
| | | C5 | | | | |
| Stabilizer | | D1 | 0.20 | 0.20 | 0.20 | 0.20 |
| | | D2 | 0.06 | 0.06 | 0.06 | 0.06 |
| Mold-release agent | | E1 | 0.61 | 0.61 | 0.61 | 0.61 |
| | | E2 | 0.20 | 0.20 | 0.20 | 0.20 |
| Melt viscosity of (A) (1216 sec$^{-1}$, Pa·s) | | | 1204 | 416 | 416 | 346 |
| Melt viscosity of (B) (1216 sec$^{-1}$, Pa·s) | | | 94 | 94 | 117 | 117 |
| Melt viscosity ratio of (A)/ (B) | | | 12.8 | 4.4 | 3.6 | 3.0 |
| Content ratio of (B) / (C) | | | 4.1 | 4.1 | 4.1 | 4.1 |
| Bending modulus (MPa) | | | 2300 | 2300 | 2300 | 2300 |
| Bending strength (MPa) | | | 85 | 86 | 84 | 84 |
| Charpy impact strength with no notches (kJ/m$^2$) | | | NB | NB | NB | NB |
| Charpy impact strength with notch (kJ/m$^2$) | | | 8 | 16 | 17 | 14 |
| Deflection temperature under load(1.80MPa,°C) | | | 95 | 94 | 95 | 95 |
| Relative permittivity (5.8 GHz) | | | 2.5 | 2.5 | 2.5 | 2.5 |
| Dielectric Dissipation factor (5.8 GHz) | | | 0.0033 | 0.0033 | 0.0033 | 0.0033 |
| Nominal tensile strain at break (%) | | | 112 | 7 | 10 | 5 |

As clear from the above-shown results, the polycarbonate resin composition of the first invention has excellent mechanical properties (impact resistance, toughness, stiffness, heat resistance and the like) and also has excellent electrical characteristics (relative permittivity and dielectric dissipation factor). In contrast, in the case of the comparative examples, it was not possible to obtain a result in which both the mechanical properties and the electrical characteristics were satisfied.

(Examples 20 to 33 of second invention and Comparative Examples 5 to 9)

[Production of polycarbonate resin composition pellets]

Each component shown in Table 1 was blended in a proportion (parts by mass) shown in Tables 5 to 7 below, mixed with a tumbler for 20 minutes and then melt-kneaded at a cylinder temperature of 260°C using a twin screw extruder (manufactured by Shibaura Machine Co., Ltd., TEM26SX), and pellets of a polycarbonate resin composition were obtained by strand cutting.

The relative permittivity, the dielectric dissipation factor, the bending modulus, the bending strength, the Charpy impact strength and the deflection temperature under load were measured in the same manner as described above.

The results are shown in Tables 5 to 7 below.

[Table 5]

| | | | Example | | | | | |
|---|---|---|---|---|---|---|---|---|
| | | | 20 | 21 | 22 | 23 | 24 | 25 |
| PC resin (A) | | A1 | 100 | 100 | 100 | 100 | 100 | 100 |
| | | A2 | | | | | | |
| | | A3 | | | | | | |
| | | A4 | | | | | | |
| Styrenic resin (B) | | B1 | 50 | 81 | 127 | 73 | 90 | 101 |
| | | B2 | | | | | | |
| | | B3 | | | | | | |
| | | B4 | | | | | | |
| Elastomer (C) | | C1 | 17 | 20 | 25 | 9 | 34 | 51 |
| | | C2 | | | | | | |
| | | C3 | | | | | | |
| | | C4 | | | | | | |
| | | C5 | | | | | | |
| Stabilizer | | D1 | 0.17 | 0.20 | 0.25 | 0.18 | 0.22 | 0.25 |
| | | D2 | 0.05 | 0.06 | 0.08 | 0.06 | 0.07 | 0.08 |
| Mold-release agent | | E1 | 0.50 | 0.61 | 0.76 | 0.55 | 0.67 | 0.76 |
| | | E2 | 0.17 | 0.20 | 0.25 | 0.18 | 0.22 | 0.25 |
| Melt viscosity of (A) (1216 sec$^{-1}$, Pa·s) | | | 628 | 628 | 628 | 628 | 628 | 628 |
| Melt viscosity of (B) (1216 sec$^{-1}$, Pa·s) | | | 94 | 94 | 94 | 94 | 94 | 94 |
| Melt viscosity ratio of (A)/ (B) | | | 6.7 | 6.7 | 6.7 | 6.7 | 6.7 | 6.7 |
| Content ratio of (B)/(C) | | | 2.9 | 4.1 | 5.1 | 8.1 | 2.6 | 2.0 |
| Bending modulus (MPa) | | | 2300 | 2300 | 2400 | 2600 | 2200 | 2000 |
| Bending strength (MPa) | | | 81 | 84 | 85 | 90 | 77 | 72 |
| Charpy impact strength with no notches (kJ/m$^2$) | | | NB | NB | 150 | NB | NB | NB |
| Charpy impact strength with notch (kJ/m$^2$) | | | 24 | 18 | 11 | 15 | 20 | 48 |
| Deflection temperature under load (1.80MPa,°C) | | | 99 | 94 | 90 | 98 | 91 | 87 |
| Relative permittivity (5.8 GHz) | | | 2.5 | 2.5 | 2.5 | 2.5 | 2.5 | 2.5 |
| Dielectric Dissipation factor (5.8 GHz) | | | 0.0038 | 0.0033 | 0.0029 | 0.0032 | 0.0033 | 0.0034 |

[Table 6]

| | | Example | | | | | | | |
|---|---|---|---|---|---|---|---|---|---|
| | | 26 | 27 | 28 | 29 | 30 | 31 | 32 | 33 |
| PC resin (A) | A1 | 100 | 100 | 100 | 100 | 100 | 100 | 100 | |
| | A2 | | | | | | | | 100 |
| | A3 | | | | | | | | |
| | A4 | | | | | | | | |
| Styrenic resin (B) | B1 | 81 | 81 | 101 | 81 | 81 | 101 | | 81 |
| | B2 | | | | | | | 73 | |
| | B3 | | | | | | | | |
| | B4 | | | | | | | | |
| Elastomer (C) | C1 | | | | | | | 9 | 20 |
| | C2 | 20 | | | | | | | |
| | C3 | | 20 | 51 | | | | | |
| | C4 | | | | 20 | | | | |
| | C5 | | | | | 20 | 51 | | |
| Stabilizer | D1 | 0.20 | 0.20 | 0.25 | 0.20 | 0.20 | 0.25 | 0.18 | 0.20 |
| | D2 | 0.06 | 0.06 | 0.08 | 0.06 | 0.06 | 0.08 | 0.06 | 0.06 |
| Mold-release agent | E1 | 0.61 | 0.61 | 0.76 | 0.61 | 0.61 | 0.76 | 0.55 | 0.61 |
| | E2 | 0.20 | 0.20 | 0.25 | 0.20 | 0.20 | 0.25 | 0.18 | 0.20 |
| Melt viscosity of (A) (1216 sec$^{-1}$, Pa·s) | | 628 | ·628 | 628 | 628 | 628 | 628 | 628 | 667 |
| Melt viscosity of (B) (1216 sec$^{-1}$, Pa·s) | | 94 | 94 | 94 | 94 | 94 | 94 | 99 | 94 |
| Melt viscosity ratio of (A)/(B) | | 6.7 | 6.7 | 6.7 | 6.7 | 6.7 | 6.7 | 6.3 | 6.7 |
| Content ratio of (B)/(C) | | 4.1 | 4.1 | 2.0 | 4.1 | 4.1 | 2.0 | 8.1 | 4.1 |
| Bending modulus (MPa) | | 2300 | 2400 | 2100 | 2300 | 2300 | 2000 | 2000 | 2300 |
| Bending strength (MPa) | | 84 | 89 | 77 | 82 | 82 | 67 | 67 | 83 |
| Charpy impact strength with no notches (kJ/m$^2$) | | NB | NB | NB | NB | NB | NB | NB | NB |
| Charpy impact strength with notch (kJ/m$^2$) | | 15 | 14 | 21 | 11 | 13 | 37 | 13 | 16 |
| Deflection temperature under load (1.80MPa,°C) | | 93 | 94 | 87 | 94 | 95 | 90 | 96 | 93 |
| Relative permittivity (5.8 GHz) | | 2.5 | 2.5 | 2.5 | 2.5 | 2.5 | 2.5 | 2.5 | 2.5 |
| Dielectric Dissipation factor (5.8 GHz) | | 0.0034 | 0.0033 | 0.0035 | 0.0034 | 0.0027 | 0.0022 | 0.0037 | 0.0033 |

[Table 7]

| | | | Comparative Example | | | | |
|---|---|---|---|---|---|---|---|
| | | | 5 | 6 | 7 | 8 | 9 |
| PC resin (A) | | A1 | 100 | 100 | 100 | | 100 |
| | | A2 | | | | | |
| | | A3 | | | | | |
| | | A4 | | | | | |
| Styrenic resin (B) | | B1 | | 25 | 67 | 100 | 204 |
| | | B2 | | | | | |
| | | B3 | | | | | |
| | | B4 | | | | | |
| Elastomer (C) | | C1 | | | | | 34 |
| | | C2 | | | | | |
| | | C3 | | | | | |
| | | C4 | | | | | |
| | | C5 | | | | | |
| Stabilizer | | D1 | 0.10 | 0.13 | 0.17 | 0.10 | 0.34 |
| | | D2 | 0.03 | 0.04 | 0.05 | 0.03 | 0.10 |
| Mold-release agent | | E1 | 0.30 | 0.38 | 0.50 | 0.30 | 1.02 |
| | | E2 | 0.10 | 0.13 | 0.17 | 0.10 | 0.34 |
| Melt viscosity of (A) (1216 sec$^{-1}$, Pa·s) | | | 628 | 628 | 628 | - | 628 |
| Melt viscosity of (B) (1216 sec$^{-1}$, Pa·s) | | | - | 94 | 94 | 94 | 94 |
| Melt viscosity ratio of (A)/(B) | | | - | 6.7 | 6.7 | - | 6.7 |
| Content ratio of (B) / (C) | | | - | - | - | - | 6.0 |
| Bending modulus (MPa) | | | 2300 | 2500 | 2700 | 3200 | 2400 |
| Bending strength (MPa) | | | 93 | 98 | 103 | 100 | 86 |
| Charpy impact strength with no notches (kJ/m$^2$) | | | NB | NB | 39 | 8 | 83 |
| Charpy impact strength with notch (kJ/m$^2$) | | | 67 | 7 | 5 | 1 | 8 |
| Deflection temperature under load (1.80 MPa, | | | 124 | 115 | 103 | 88 | 89 |
| Relative permittivity (5.8 GHz) | | | 2.7 | 2.6 | 2.6 | 2.4 | 2.5 |
| Dielectric Dissipation factor (5.8 GHz) | | | 0.0054 | 0.0041 | 0.0031 | 0.0004 | 0.0025 |

The member for an antenna of the present invention has excellent mechanical properties (impact resistance, stiffness, heat resistance and the like) and also has excellent electrical characteristics (relative permittivity and dielectric dissipation factor).

In contrast, in the case of the comparative examples, it was not possible to obtain a result in which both the mechanical properties and the electrical characteristics were satisfied.

[Industrial Applicability]

The polycarbonate resin composition of the present invention has a low relative permittivity and a low dielectric dissipation factor, has a reduced transmission attenuation, is excellent in terms of heat resistance, impact resistance and stiffness and can be thus broadly and suitably used in a variety of electronic and electrical equipment parts in which an electromagnetic wave is used. In addition, the member for an antenna of the present invention has both a low relative permittivity and a low dielectric dissipation factor, has a reduced transmission attenuation, is excellent in terms of heat resistance, impact resistance and stiffness and can be thus broadly and suitably used as a variety of members for an antenna in which an electromagnetic wave having a frequency of 1 GHz or higher is used.

**Claims**

1. A polycarbonate resin composition comprising, relative to 100 parts by mass of a polycarbonate resin (A), 30 to 150 parts by mass of a polystyrenic resin (B), and 3 to 60 parts by mass of an elastomer (C),
   wherein a melt viscosity ratio ($\eta A/\eta B$) of the polycarbonate resin (A) to the polystyrenic resin (B) at 260°C and 1216 sec$^{-1}$ is within a range of 4.5 to 12.5.

2. The polycarbonate resin composition of claim 1,
   wherein the elastomer (C) is one or two or more selected from a butadiene/methyl (meth)acrylate copolymer, a butadiene/methyl (meth)acrylate/styrene copolymer and a styrene/ethylene/butylene/styrene copolymer.

3. The polycarbonate resin composition of claim 1 or 2,
   wherein a dielectric dissipation factor at a frequency of 5.8 GHz is 0.0040 or less.

4. The polycarbonate resin composition of claim 1 or 2,
   wherein a ratio [(B)/(C)] of contents of the polystyrenic resin (B) to the elastomer (C) is 9 or less.

5. The polycarbonate resin composition of claim 1 or 2,
   wherein an acrylonitrile-butadiene-styrene copolymer is not contained, or when contained, a content thereof is 10 parts by mass or less relative to 100 parts by mass of the polycarbonate resin (A) .

6. A molded article of the polycarbonate resin composition of claim 1 or 2.

7. A member for an antenna which utilizes an electromagnetic wave with a frequency of 1 GHz or more, made from a polycarbonate resin composition having a dielectric dissipation factor of 0.0040 or less at a frequency of 5.8 GHz comprising 30 to 150 parts by mass of a polystyrenic resin (B) and 3 to 60 parts by mass of an elastomer (C) relative to 100 parts by mass of a polycarbonate resin (A).

8. The member for the antenna of claim 7,
   wherein the elastomer (C) is one or two or more selected from a butadiene/methyl (meth)acrylate copolymer, a butadiene/methyl (meth)acrylate/styrene copolymer and a styrene/ethylene/butylene/styrene copolymer.

9. The member for the antenna of claim 7 or 8,
   wherein a ratio [(B)/(C)] of contents of the polystyrenic resin (B) to the elastomer (C) of the polycarbonate resin composition is 9 or less.

10. The member for the antenna of claim 7 or 8,
    wherein an acrylonitrile-butadiene-styrene copolymer is not contained, or when contained, a content thereof is 10 parts by mass or less relative to 100 parts by mass of the polycarbonate resin (A) .

# EP 4 497 784 A1

| INTERNATIONAL SEARCH REPORT | International application No. |
|---|---|
| | **PCT/JP2023/008182** |

**A. CLASSIFICATION OF SUBJECT MATTER**

*C08L 69/00*(2006.01)i; *C08L 9/00*(2006.01)i; *C08L 21/00*(2006.01)i; *C08L 25/04*(2006.01)i; *C08L 53/00*(2006.01)i; *H01Q 1/42*(2006.01)i
FI: C08L69/00; C08L25/04; C08L21/00; C08L9/00; C08L53/00; H01Q1/42

According to International Patent Classification (IPC) or to both national classification and IPC

**B. FIELDS SEARCHED**

Minimum documentation searched (classification system followed by classification symbols)

C08L69/00; C08L9/00; C08L21/00; C08L25/04; C08L53/00; H01Q1/42

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2000-007904 A (MITSUBISHI ENG. PLAST. CORP.) 11 January 2000 (2000-01-11) claims 1-5, paragraphs [0018], [0025]-[0039], example 5 | 1-6 |
| A | | 7-10 |
| A | JP 2014-074162 A (MITSUBISHI ENG. PLAST. CORP.) 24 April 2014 (2014-04-24) paragraphs [0079]-[0097] | 1-10 |
| A | JP 2010-202782 A (FUJI XEROX CO., LTD.) 16 September 2010 (2010-09-16) claim 1, example 6 | 1-10 |
| A | JP 2001-172491 A (DAICEL CHEM. IND., LTD.) 26 June 2001 (2001-06-26) claim 1 | 1-10 |
| A | JP 2000-025091 A (DAICEL CHEM. IND., LTD.) 25 January 2000 (2000-01-25) claim 1, example 4 | 1-10 |
| A | JP 11-310693 A (NIPPON STEEL CHEM. CO., LTD.) 09 November 1999 (1999-11-09) claim 1, example 8 | 1-10 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

**INTERNATIONAL SEARCH REPORT**

| International application No. |
|---|
| **PCT/JP2023/008182** |

**C.    DOCUMENTS CONSIDERED TO BE RELEVANT**

| Category* | Citation of document, with indication, where appropriate, of the relevant passages | Relevant to claim No. |
|---|---|---|
| A | JP 2006-241201 A (TORAY IND., INC.) 14 September 2006 (2006-09-14)<br>claim 1 | 1-10 |

Form PCT/ISA/210 (second sheet) (January 2015)

**INTERNATIONAL SEARCH REPORT**
Information on patent family members

International application No.

**PCT/JP2023/008182**

| Patent document cited in search report | | | Publication date (day/month/year) | Patent family member(s) | Publication date (day/month/year) |
|---|---|---|---|---|---|
| JP | 2000-007904 | A | 11 January 2000 | US 2003/0018134 A1 claims 1, 5, paragraphs [0038], [0058]-[0118], example 7 | |
| JP | 2014-074162 | A | 24 April 2014 | US 2015/0111041 A1 paragraphs [0122]-[0160] WO 2014/042285 A1 KR 10-2014-0114458 A CN 104159971 A | |
| JP | 2010-202782 | A | 16 September 2010 | (Family: none) | |
| JP | 2001-172491 | A | 26 June 2001 | (Family: none) | |
| JP | 2000-025091 | A | 25 January 2000 | (Family: none) | |
| JP | 11-310693 | A | 09 November 1999 | (Family: none) | |
| JP | 2006-241201 | A | 14 September 2006 | US 2008/0176999 A1 claim 1 EP 1854842 A1 KR 10-2007-0108190 A CN 101128534 A | |

Form PCT/ISA/210 (patent family annex) (January 2015)

**REFERENCES CITED IN THE DESCRIPTION**

**Patent documents cited in the description**

- JP 2013102512 A

- JP 2019195137 A

**Non-patent literature cited in the description**

- *Macromol. Chem.*, 1965, vol. 88, 215